# EUROPEAN PATENT APPLICATION

(11) **EP 0 653 651 A1**
(43) Date of publication of application: **17.05.1995**
(21) Application number: 94118023.4
(22) Date of filing: 15.11.1994
(51) Int. Cl.: G02B 5/32, B60Q 1/30, G03H 1/26

(54) **Dual image CHMSLs using diffuse images**

(30) Priority: 15.11.1993 US 151623; 16.11.1993 US 153732; 22.11.1993 US 155318; 30.11.1993 US 159966
(71) Applicant: Hughes Aircraft Company, Los Angeles, California 90045-0066 (US)
(72) Inventor: Wreede, John E., Azusa, CA 91702 (US); Smith, Ronald T., Torrance, CA 90504 (US); Virgadamo, Michael J., Pasadena, CA 91106 (US); Upper, Richard B., Sherman Oaks, CA 91403 (US)
(74) Representative: Gahlert, Stefan, Dr.-Ing.

(57) **Abstract**

A hologram structure for use in a holographic center high mounted stoplight system for a vehicle. The hologram structure includes first and second hologram layers (31, 32) laminarly secured to each other, each having a plurality of holographic cells formed therein, each holographic cell being configured to emit diffuse light into a respective predetermined angular field.

## Description

### BACKGROUND OF THE INVENTION

The disclosed invention is directed generally to holograms for center high mounted stoplights for vehicles, and more particularly to a hologram that efficiently meets the required brightness and angular coverage and to an exposure technique for recording such hologram.

Present federal regulations require center high mounted stoplights (CHMSLs) in addition to the standard stoplights mounted in the rear portion of an automobile. The high mounted stoplights are intended to maximize the visibility of the automobile braking indicators to drivers following the braking vehicle, and are commonly mounted on the rear window of an automobile.

High mounted stoplights have commonly been implemented as a standard lenticular lens, a red filter, an illuminating incandescent bulb, and a reflector enclosed in a housing that is typically secured adjacent the top or bottom of an automobile rear window. However, the bulky housing partially obscures the rearward vision of the driver, and moreover imposes limitations on the design of the automobile.

Center high mounted stoplights have been also integrated into automobile body parts such as rear decks, spoilers, roofs, which to some degree substantially reduce or remove the rearward vision problem. However, such stoplights are complex and may impose limitations on the design of the automobile.

Holographic center high mounted stoplights have also been developed in order to efficiently meet the stoplight regulations. A consideration with the use of holograms for holographic center high mounted stoplights is the desire to achieve an output having a lenticulated appearance that is similar to that provided by conventional stoplights.

Another consideration with the use of holograms for holographic center high mounted stoplights is the complexity in meeting governmental luminous intensity and angular coverage requirements while utilizing a reconstruction light source of minimum power. The luminous intensity and angular coverage requirements generally include a quantitative aspect that defines luminous intensity over a defined central angular field, and a qualitative aspect that requires visibility over a horizontal angular field that is greater than the horizontal component of the defined central angular field. Essentially, the regulations require a brighter region generally in the center of the required angular field of coverage.

### SUMMARY OF THE INVENTION

It would therefore be an advantage to provide a holographic center high mounted stoplight that provides an output having an appearance that is similar to the lenticulated output of a conventional stoplight.

Another advantage would be to provide a holographic center high mounted stoplight that readily meets governmental luminous intensity and angular coverage requirements while utilizing a reconstruction light source of minimum power.

The foregoing and other advantages are provided by the invention in a holographic stoplight system that includes a light source for providing a reconstruction beam, a first array of non-overlapping hologram and non-hologram cells, wherein each hologram cell of the first array emits diffuse illumination into a first predetermined angular field pursuant to diffraction of a portion of the reconstruction beam, and a second array of non-overlapping hologram cells and non-hologram cells, wherein each hologram cell of the second array emits diffuse illumination into a second predetermined angular field pursuant to diffraction of a portion of the reconstruction beam. The first array of cells is arranged in a first predetermined pattern so as to produce a pattern of bright and dark areas within the first angular field pursuant to diffraction by the hologram cells of the first array, and the second array of cells is arranged in a second predetermined pattern so as to produce a pattern of bright and dark areas within the second angular field pursuant to diffraction by the hologram cells of the second array, whereby the portions of the reconstruction beam that are diffracted by the holographic lenses of the first and second holograms form stoplight illumination.

### BRIEF DESCRIPTION OF THE DRAWINGS

The advantages and features of the disclosed invention will readily be appreciated by persons skilled in the art from the following detailed description when read in conjunction with the drawing wherein:
FIG. 1 sets forth a schematic sectional view illustrating a holographic vehicle center high mounted stop light in accordance with the invention.
FIG. 2 sets forth a luminous intensity distribution graph depicting present vertical and horizontal requirements in candelas for center high mounted stoplights.
FIG. 3 schematically illustrates the organization of the cells of one of the holograms of the holographic center high mounted stop light of FIG. 1.
FIG. 4 schematically illustrates the organization of the cells of the other of the holograms of the holographic center high mounted stop light of FIG. 1.
FIGS. 5A and 5B schematically illustrate the playback characteristics of each of the hologram cells of the hologram of FIG. 3 in elevational view and in plan view.
FIGS. 6A and 6B schematically illustrate the playback characteristics of each of the hologram cells of the hologram of FIG. 4 in elevational view and in plan view.
FIG. 7 sets forth by way of illustrative example an exposure system for constructing the CHMSL hologram of FIG. 3.
FIG. 8 sets forth by way of illustrative example a schematic illustration of a spherical lens array that is utilized in the exposure set up of FIG. 7 for construction of the hologram of FIG. 3.
FIG. 9 sets forth by way of illustrative example a schematic illustration of a mask that is utilized to mask the output of a diffusion screen in the exposure set up of FIG. 7 for construction of the hologram of FIG. 3.
FIG. 10 sets forth by way of illustrative example a schematic illustration of a mask that is utilized to define the areas of hologram cells in the exposure set up of FIG. 7 for construction of the hologram of FIG. 3
FIG. 11 sets forth by way of illustrative example an exposure system for constructing the CHMSL hologram of FIG. 4.
FIG. 12 is an elevational view of a mask and baffles utilized in the exposure system of FIG. 11.
FIG. 13 is a plan view of the mask and baffles of utilized in the exposure system of FIG. 11.
FIG. 14 a mask that is utilized to define hologram cells in the exposure set up of FIG. 11 for construction of the hologram of FIG. 4.
FIG. 15 sets forth by way of illustrative example a copy system for making hologram copies of hologram masters made pursuant to the exposure systems of FIGS. 7 and 11.

### DETAILED DESCRIPTION OF THE DISCLOSURE

In the following detailed description and in the several figures of the drawing, like elements are identified with like reference numerals.

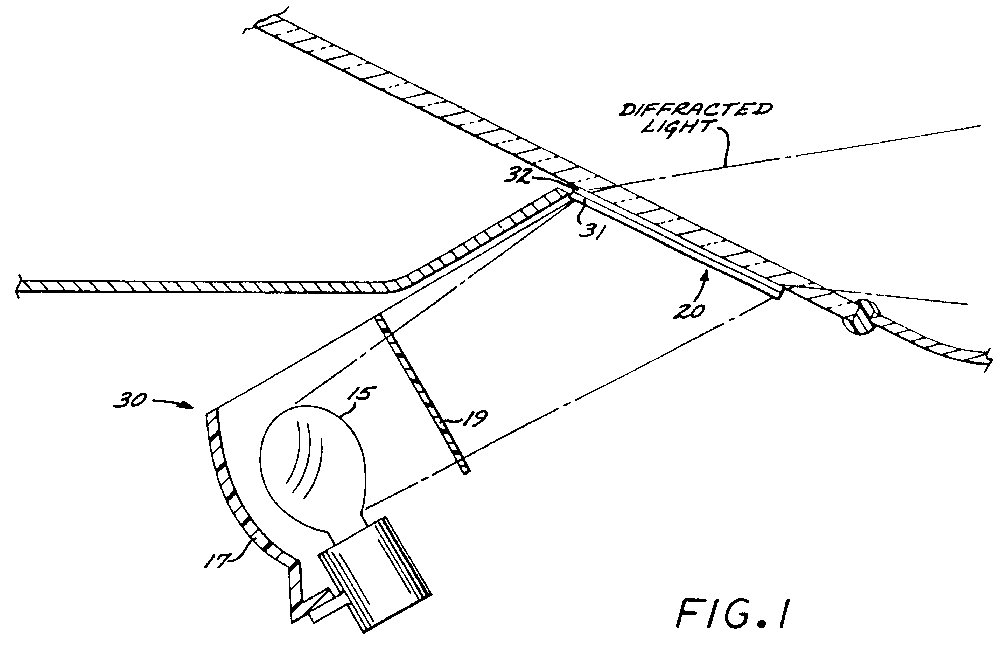

Referring now to FIG. 1, shown therein is a center high mounted stoplight system which includes a hologram assembly 20 and an illumination source 30. The hologram assembly 20, which includes first and second laminarly layered volume transmission holograms 31, 32 described further herein, is secured to the inside surface of an automobile rear window 211. Alternatively, the hologram assembly 20 can be secured to a separate substrate that is appropriately located near the rear window 211. The illumination source 30 is mounted forward of the hologram assembly 20 and out of the rearward viewing angle of the driver, for example, beneath the generally horizontal rear deck that is adjacent the lower portion of the rear window 211 of the automobile, and illuminates the volume holograms 31, 32 of the hologram assembly 20 with a reconstruction beam.

The volume holograms 31, 32 of the hologram assembly are constructed to provide, when illuminated by the illumination source 30, an appropriate composite image that is visible from behind the automobile over the appropriate vertical and horizontal viewing field. Since the following will discuss the volume holograms 31, 32 in terms of their angular coverage (i.e., the angular fields in which their light output can be seen), as well as their construction, angular fields will generally be with reference to the installed configuration of the holograms, for ease of reference. As used herein, the term angular field and angular coverage refers to all angular regions in space into which light is diffracted by a hologram cell and thus refers to the angular region or regions in which the diffracted light is viewable. Since the angular coverage defines the angular fields in which the light output of a hologram can be seen, it should be appreciated that the diffracted output of a hologram is confined to its angular coverage and some additional blurring. The holograms of the hologram assembly are configured to produce diffracted illumination that is visible from behind the vehicle in which they are installed, and thus their angular fields extend rearwardly away from the vehicle.

The illumination source 30 includes an incandescent lamp 15, such as a quartz halogen bulb, a reflector 17 that cooperates with the filament of the incandescent lamp 15 to provide a reconstruction beam to the hologram assembly 20, and a high pass filter 19 having a cutoff wavelength of about 600 nanometers (nm). By way of illustrative example, the reflector 17 comprises a parabolic reflector that cooperates with the filament of the incandescent lamp 15 to produce a near collimated reconstruction beam. As a result of the wavelength dependent sensitivity of human vision, the image provided by the hologram of the hologram assembly will be perceived as red, with the apparent peak intensity being somewhere between about 610 and 620 nm. The incandescent lamp 15 is connected to the brake light actuating circuit of the automobile so as to be energized when the brake pedal is depressed.

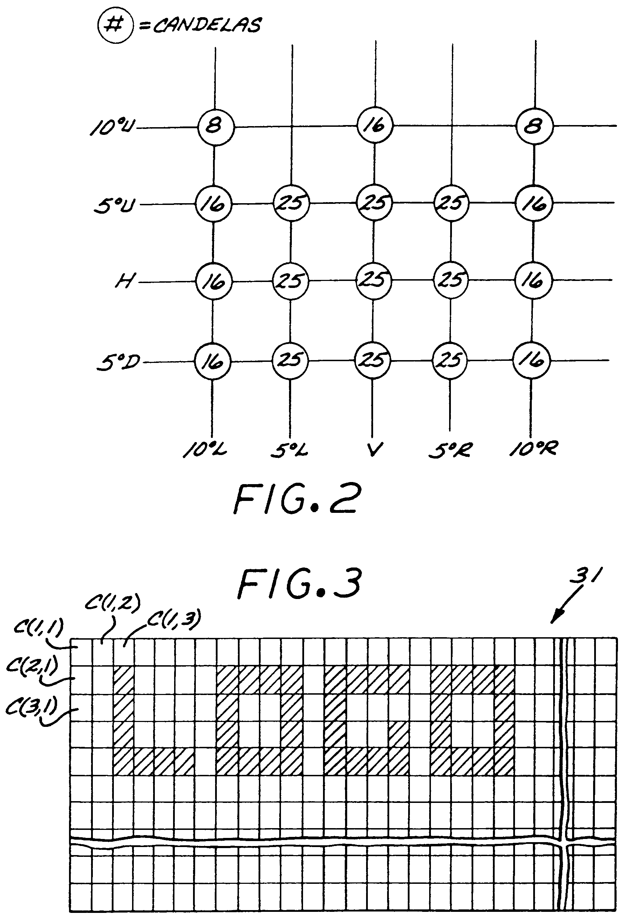

Referring now to FIG. 2, set forth therein is a graph showing the luminous intensity (in candelas) versus angular field requirements for a center high mounted stoplight for a central angular field defined as (a) 10 degrees up and 5 degrees down relative to a central horizontal plane H that passes through the center of the CHMSL, and (b) 10 degrees left and right relative to a central vertical plane V that passes through the center of the CHMSL and contains the longitudinal axis of the vehicle, as set forth in Federal Motor Vehicle Safety Standards No. 108 ("MVSS 108" herein). The numbers in the graph identify the minimum luminous intensities at those angular locations in candelas, and the entire angular field is subject to a 160 candela maximum at any given angular position.

In addition to the foregoing quantitative requirements, herein called the "central angular field requirements," there is a qualitative requirement that the stoplight be visible within the central horizontal plane over a range of 45 degrees on either side of the central vertical plane (i.e., two horizontal angular regions that are mirror images of each other). By way of example, this qualitative requirement can be interpreted as requiring a luminous intensity of about 1 candela. Such requirement as to visibility with the central horizontal plane over the range of 45 degrees on either side of the central vertical plane shall be called herein the wide angle horizontal requirement.

In accordance with the invention, the holograms 31, 32 are configured to diffract diffuse light into different angular fields pursuant to illumination with the reconstruction beam provided by the illumination source, wherein the diffracted light produced by each hologram comprises (a) bright areas and (b) dimmer or dark areas arranged in a recognizable pattern such as a logo or alphanumeric characters, for example.

Referring now to FIG. 3, schematically depicted therein is the hologram 31 prior to lamination with the other hologram 32, with the surface shown being the surface that will face rearwardly when installed in a vehicle. The hologram comprises a rectilinear array or grid of non-overlapping contiguous hologram and non-hologram cells or facets C(i,j) of identical size. Each hologram cell, depicted by a non-shaded rectangle in FIG. 3, produces a diffracted diffuse output having a desired angular coverage that is the same for all of the facets C(i,j) that comprise hologram cells. That is, the diffuse output of each holographic cell is viewable from within a predetermined angular space, and such angular space is substantially identical for each hologram cell of the first hologram 31. Each non-hologram cell, depicted by a shaded rectangle in FIG. 3, comprises a transparent area that does not contain a hologram and does not diffract reconstruction illumination incident thereon.

In accordance with the invention, the hologram and non-hologram cells of the hologram of FIG. 3 are arranged in a pattern so as to produce a recognizable pattern of bright and dark areas, for example a logo, when the hologram is illuminated by a reconstruction beam. The bright areas are produced by the hologram cells, and the dark areas are produced by the non-hologram cells.

Alternatively, dim hologram cells can be substituted for the non-hologram cells of the hologram 31 of FIG. 3, in which case the bright hologram cells and the dim hologram cells of the hologram of FIG. 3 are arranged in a pattern so as to produce a recognizable pattern of bright and dim areas, for example a logo, when the hologram is illuminated by a reconstruction beam. The bright areas are produced by the bright hologram cells, and the dim areas are produced by the dim hologram cells. By way of illustrative example, each dim hologram cell comprises a half-tone hologram comprised of an array of small hologram and non-hologram areas.

By way of reference, the top row of cells C(1,j) in the figure comprises the top of the hologram 31 as it is positioned in the installed hologram assembly of the CHMSL system, whereby each row of cells is generally aligned with the horizontal. Consistently with such orientation, the parallel edges of a cell that are generally aligned with horizontal when installed in the vehicle shall be called the top and bottom edges wherein the top edge is closest to the top of the figure and is closest to the top of the rear window when installed. Also, the parallel edges of a cell that are perpendicular to the top and bottom edges shall be referred to as the side edges. The cells C(i,j) are of identical size, and the width of a cell is measured along the top or bottom edge, while the height of a cell is measured along either of the side edges.

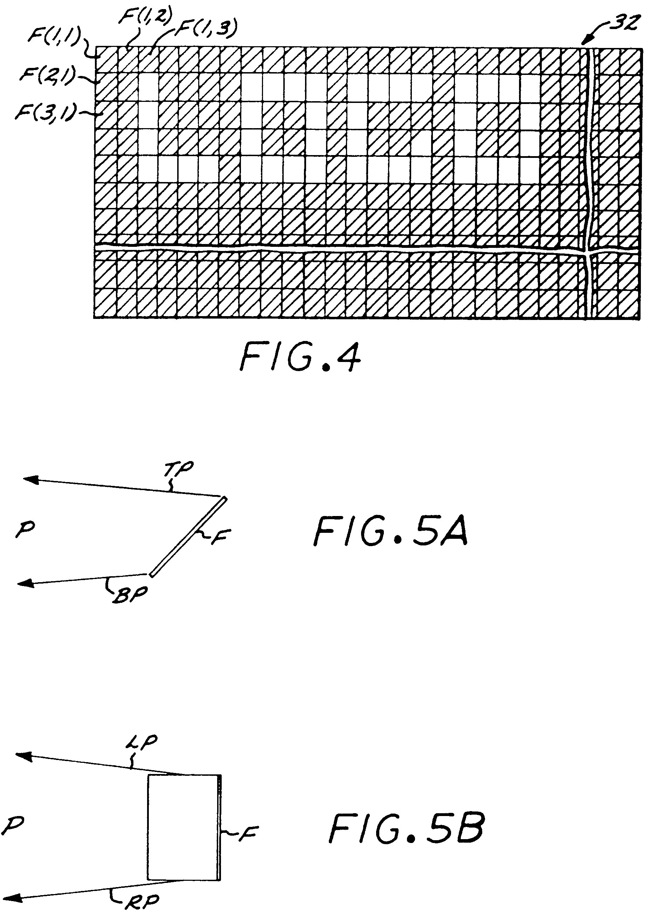

Referring now to FIG. 4, schematically depicted therein is the hologram 32 prior to lamination with the other hologram 31, with the surface shown being the surface that will face outside of vehicle when installed. The hologram comprises a rectilinear array or grid of non-overlapping contiguous hologram and non-hologram cells or facets F(i,j) of identical size. Each hologram cell, depicted by a non-shaded rectangle in FIG. 4, produces a diffracted output having a desired angular coverage that is the same for all of the facets F(i,j) that comprise hologram cells. That is, the diffuse output of each holographic cell is viewable from within a predetermined angular space, and such predetermined angular space is substantially identical for each hologram cell of the second hologram 32. Each non-hologram cell, depicted by a shaded rectangle in FIG. 4, comprises a transparent area that does not contain a hologram.

In accordance with the invention, the hologram and non-hologram cells of the hologram of FIG. 4 are arranged in a pattern so as to produce a recognizable pattern of bright and dark areas, for example a logo, when the hologram is illuminated by a reconstruction beam. The bright areas are produced by the hologram cells, and the dark areas are produced by the non-hologram cells.

Alternatively, dim hologram cells can be substituted for the non-hologram cells of the hologram 32 of FIG. 4, in which case the bright hologram cells and the dim hologram cells of the hologram of FIG. 4 are arranged in a pattern so as to produce a recognizable pattern of bright and dim areas, for example a logo, when the hologram is illuminated by a reconstruction beam. The bright areas are produced by the bright hologram cells, and the dim areas are produced by the dim hologram cells. By way of illustrative example, each dim hologram cell comprises a half-tone hologram comprised of an array of small hologram and non-hologram areas.

By way of reference, the top row of hologram cells F(1,j) in the figure comprises the top of the hologram 32 as it is positioned in the installed hologram assembly of the CHMSL system, whereby each row of holograms cells is generally aligned with the horizontal. Consistently with such orientation, the parallel edges of a cell that are generally aligned with horizontal when installed in the vehicle shall be called the top and bottom edges wherein the top edge is closest to the top of the figure and is closest to the top of the rear window when installed. Also, the parallel edges of a cell that are perpendicular to the top and bottom edges shall be referred to as the side edges. The cells F(i,j) are of identical size, and the width of a cell is measured along the top or bottom edge, while the height of a cell is measured along either of the side edges.

By way of illustrative example, the respective hologram and non-hologram (or dim hologram) cell patterns of the first and second holograms can be the negative of each other wherein the bright areas and dark (or dim) areas in one hologram are respectively dark (or dim) areas and bright areas in the other hologram. For example, a logo formed by the dark (or dim) areas in one hologram can be formed by bright areas in the other hologram.

In accordance with the invention, each of the hologram facets or cells of one of the holograms 31, 32 is configured to diffract diffuse light into the central solid angular region depicted in FIG. 2, namely a solid angle having upper and lower limits of 10 degrees up and 5 degrees down relative to horizontal, and lateral limits of 10 degrees on either side of a vertical plane that is parallel to the longitudinal axis of the vehicle. In other words, the solid angular region is centered on a line that passes through the center of a hologram cell, is about 2.5 degrees above horizontal, and is in a vertical plane that is parallel to the longitudinal axis of the vehicle. Each of the hologram cells of the other hologram is configured to diffract diffuse light into two horizontal regions on either side of the central solid angular region such that the combination of both holograms meets the horizontal wide angle requirement. Such two horizontal regions shall sometimes be called the peripheral horizontal angular regions.

It should be appreciated that while hologram angular coverage is discussed in terms of precise angles, the actual coverage will typically slightly exceed the constructed angular coverage due to blurring caused by a non-ideal reconstruction beam. Thus, to the extent that two hologram cells are constructed to have respective non-overlapping angular coverages that are contiguous without a gap in coverage, in practice there will be overlap in coverage due to blurring.

For ease of reference, the hologram that diffracts diffuse light into the central solid angular region shall sometimes be called the narrow angle hologram while the other hologram shall sometimes be called the wide angle hologram. Each of the hologram cells of the narrow angle hologram produces an image of a diffuser whose output is generally confined to the central solid angular region, while each of the hologram cells of the wide angle hologram produces an image of a diffuser whose output is generally confined to the horizontal peripheral regions on either side of the central solid angular region.

In accordance with the invention, the hologram cells of the first hologram 31 diffract light into respective substantially identical predetermined angular fields, and the cells of the second hologram 32 diffract light into respective substantially identical predetermined angular fields that are different from the predetermined angular fields of the hologram cells of the hologram 31. By way of illustrative example, holograms 31, 32 have substantially identical arrays of cells wherein the cell size is substantially identical and the arrangement of cells is substantially identical. By way of further illustrative example, the cell arrays of the holograms 31, 32 are aligned when the holograms are laminarly secured to each other such that each cell in the hologram 31 has a corresponding cell in the hologram 32, and the boundaries of corresponding cells are aligned.

The number of cells in each of the holograms 31, 32 and the arrangement of cells in each of the holograms will depend on the overall shape and size of the entire format of each hologram and the selected cell size, wherein cell size is selected pursuant to consideration of factors such as appearance, the nature of the pattern of bright and dark (or dim) areas, and ease of production. Further considerations for the dimensions of the hologram cells include sizing the cells to match the particular automobile design, as well as sizing the cells to achieve appropriate resolution of the recognizable pattern of bright and dim (or dark) areas.

For the illustrative example wherein the first hologram 31 comprises the wide angle hologram and the second hologram 32 comprises the narrow angle hologram, each hologram cell F of the second hologram 32 is constructed such that upon reconstruction each hologram cell F produces the image of a diffuser that emits light into an angular field comprising a solid angular region having upper and lower limits of 10 degrees up and 5 degrees down relative to horizontal, and lateral limits of 10 degrees on either side of a vertical plane that is parallel to the longitudinal axis of the vehicle. Further for such illustrative example, each hologram cell C of the first hologram 31 is constructed such that upon reconstruction each cell C produces the image of a diffuser that emits diffuse light into an angular field comprised of two peripheral angular regions on either side of the central solid angular region. For example, both peripheral solid angular regions have upper and lower limits of about 5 degrees up and about 5 degrees down relative to horizontal. One peripheral angular region is between 10 degrees and 45 degrees on one side of a vertical plane that is parallel to the longitudinal axis of the vehicle, while the other angular region is between 10 degrees and 45 degrees on the other side of a vertical plane.

As described more fully herein, the angular field into which a hologram cell emits light is controlled by the construction of the hologram cells.

Referring in particular to FIGS. 5A and 5B, schematically set forth therein are an elevational side view and a top plan view of a hologram cell F, for the example wherein the second hologram 32 comprises the narrow angle hologram, as oriented in an installed hologram assembly together with the angular field of the diffracted output the cell. As shown in FIG. 5A, the upper and lower boundaries of the diffracted output angular range comprise (1) a top plane TP that extends from top edge of the hologram cell at a vertical angle of 10 degrees up from horizontal and (2) a bottom plane BP that extends from the lower edge of the hologram cell at a vertical angle of 5 degrees down from horizontal. The top plane TP and the bottom plane BP are depicted by lines in FIG. 5A since such planes are orthogonal to the plane of the figure. As shown in FIG. 5B, the lateral boundaries of the output angular field comprise (1) a left side plane LP that extends from the left edge of the hologram cell at a horizontal angle of 10 degrees left of a vertical plane that is parallel to the centerline of the vehicle and (2) a right side plane that extends from the right edge of the hologram cell at a horizontal angle of 10 degrees right of a vertical plane that is parallel to the centerline of the vehicle. The left side plane LP and the right side plane RP are depicted by lines in FIG. 5B since such planes are orthogonal to the plane of the figure.

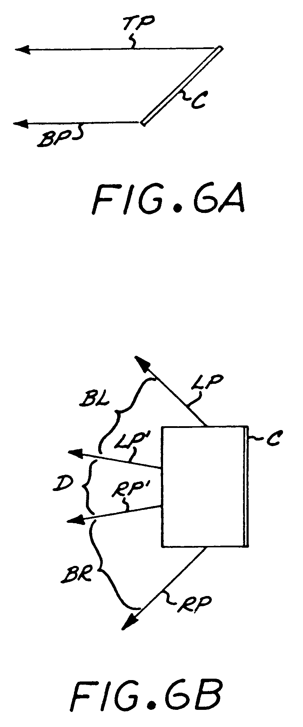

Further as to the particular example wherein the second hologram 32 comprises the narrow angle hologram and the first hologram 31 comprises the wide angle hologram, set forth in FIGS. 6A and 6B are an elevational side view and a top plan view of a hologram cell C of the hologram 31, as oriented in an installed hologram assembly together with the left and right angular ranges of the diffracted output. The lateral boundaries of the left diffracted output angular region comprises (1) a left side plane LP that extends from the left edge of the hologram cell at an angle that is 45 degrees left of a vertical plane that is parallel to the centerline of the vehicle and (2) a plane LP' that is 10 degrees left of a vertical plane that is parallel to the centerline of the vehicle. The lateral boundaries of the right output beam BR are determined by (1) a right side plane RP that extends from the right edge of the hologram cell at angle of 45 degrees fright of a vertical plane and (2) a plane RP' that is 10 degrees to the right of a vertical plane that passes through the center of the hologram cell. The planes LP, LP', RP, RP' are depicted by lines in FIG. 6B since such planes are orthogonal to the plane of the figure. As described further herein, the planes LP, LP', RP, RP' are defined by appropriate masking of the object beam utilized to construct the hologram cell C.

As to the foregoing particular example wherein the first hologram 31 is closest to the reconstruction source 30 and comprises the wide angle hologram, the wide angle hologram would have to be relatively inefficient to allow most of the reconstruction illumination to pass through to the narrow angle hologram which needs to provide a considerably brighter output. For example, the wide angle hologram could have an efficiency of about 30-40% for ideal reconstruction illumination while the narrow angle hologram could have an efficiency of at least 90% for ideal reconstruction illumination.

To the extent that the wide angle hologram is implemented with relatively high efficiency, the second hologram 32 should be implemented as the wide angle hologram and the first hologram should be implemented as the narrow angle hologram, and both holograms should have relatively high efficiencies of at least 90% for ideal reconstruction illumination. These conditions follow from the requirement that the diffracted light output of the narrow angle hologram must be considerably greater than the diffracted light output of the wide angle hologram. By making the narrow angle hologram relatively efficient and locating it closest to the reconstruction source, the narrow angle hologram can meet the luminous intensity requirements by diffracting most of the reconstruction illumination. Since most of the reconstruction illumination is diffracted by the narrow angle hologram, the reconstruction illumination available to the wide angle hologram is reduced considerably and it also must have a relatively high efficiency of at least 90% for ideal reconstruction illumination.

It should be pointed out that as to both of the foregoing implementations as to the sequence of the narrow angle and wide angle holograms, loss due to re-diffraction should be considered for implementations wherein wide angle hologram cells and narrow angle hologram cells are superimposed.

In the implementation wherein wide angle hologram cells and narrow angle hologram cells are superimposed, and wherein the wide angle hologram is closest to the reconstruction illumination source, only a small amount of diffracted light within the central solid angular region would be incident on the narrow angle hologram as result of the limited overlap in the angular coverages of the narrow angle and wide angle holograms and also the relatively low efficiency of the wide angle hologram for such implementation. Accordingly, only a small amount of diffracted light would be re-diffracted by the narrow angle hologram.

In the implementation wherein narrow angle hologram cells and wide angle hologram cells are superimposed, and wherein the narrow angle hologram is closest to the reconstruction illumination source, a large amount of diffracted light within the narrow angle central region defined by MVSS 108 will be incident on the wide angle hologram. However, since the wide angle hologram is constructed to reduce the amount of light it diffracts into the central angular region, the amount of re-diffraction of the light diffracted by the narrow angle hologram is reduced.

Each of the first and second holograms 31, 32 is made from an appropriate holographic recording layer in which the non-hologram cells are formed by exposing areas thereof that are to contain the non-hologram cells to incoherent light. For example, a film type mask having transparent areas that define the non-hologram cells is placed adjacent the holographic recording layer and index matched thereto by a thin layer of index matching fluid. The mask is then illuminated with incoherent light such that the areas of the hologram recording layer uncovered by the mask are desensitized holograms cannot be formed therein. The hologram cells are then formed by hologram forming exposure. All hologram cells in a hologram can be exposed to diffract identically, or they can be exposed to have different diffraction characteristics, depending upon the specific requirements such as the curvature of the installed hologram assembly, or non-collimation of the illumination source. Further, the hologram cells in a hologram can be exposed one cell at a time or several hologram cells at a time.

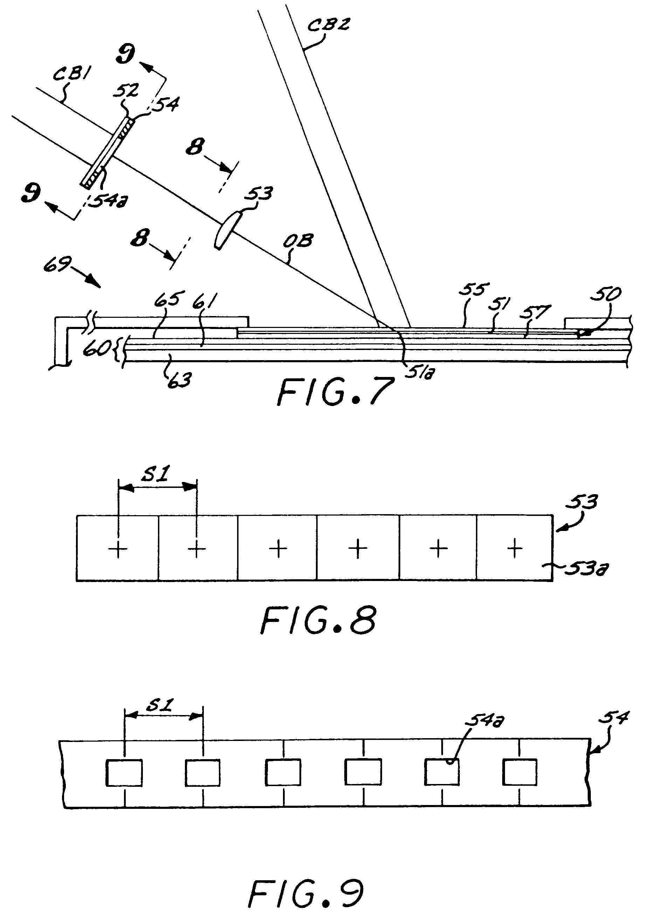

Referring now to FIG. 7, set forth therein by way of illustrative is an exposure set up for recording the hologram cells of the narrow angle hologram by a sequence of exposures wherein each exposure is capable of exposing a plurality of non-contiguous hologram cells in a row. The exposure set up includes a horizontal linear array 53 of plano-convex spherical lenses 53a which receives the masked output of a diffusion screen 52 that is illuminated with a collimated beam CB1. The diffusion screen 252 is displaced from the plano-convex spherical lenses 253a by the focal length of such lenses, which are schematically depicted in FIG. 8 as viewed from the output side of the diffusion screen 52. The output of the diffusion screen 52 is masked by a film type mask 54 that is opaque except for a horizontal linear array of transparent areas 54 as schematically depicted in FIG. 9, as viewed from the output side of the mask 54. The curved surfaces of the plano-convex spherical lenses 53 are toward the diffusion screen, as shown in FIG. 7. The mask transparent areas 54a are aligned with the spherical lenses 53a so as to have the same center to center spacing S1, which is equal to an integral number of adjacent cells to be formed in the holographic recording layer being exposed. For ease of illustration, the masked outputs of the diffusion screen 52 and the outputs of the plano-convex spherical lenses 53 are represented by centerlines.

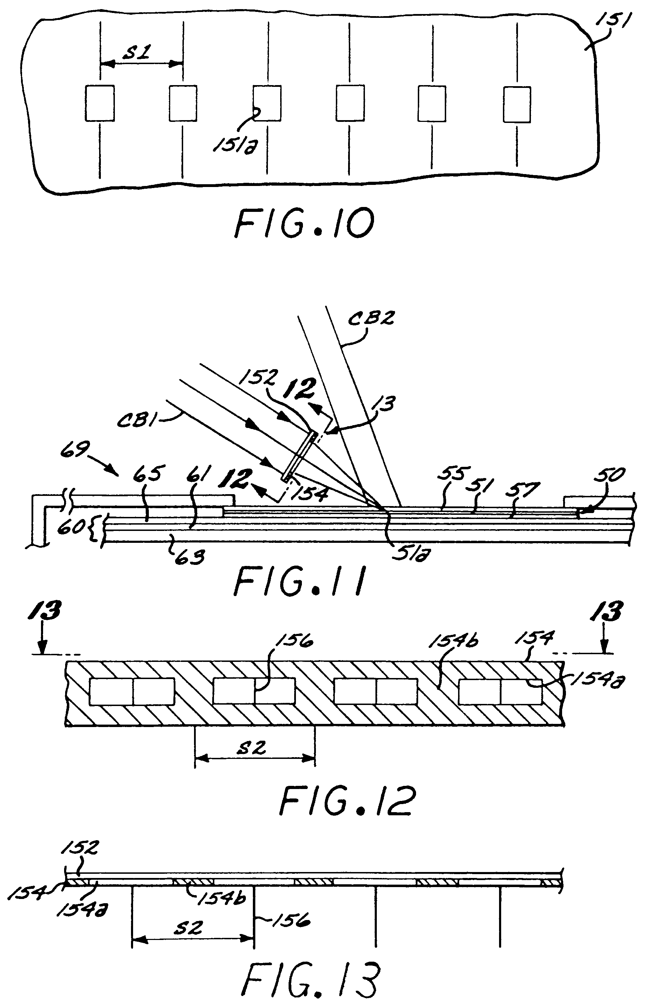

The exposure set up further employs a film type mask 51, as schematically depicted in FIG. 10, that it is opaque except for uniformly spaced transparent areas 51a of the same size as each of the cells of the CHMSL holograms 31, 32 and aligned with the plano-convex spherical lenses 53a so as to have the same center-to-center spacing S1 as the plano-convex lenses 53a. The number of transparent areas is the same as the number of plano-convex lenses 53a. The horizontal center-to-center spacing S1 of the plano-convex spherical lenses, the mask transparent areas 54a, and the mask transparent areas 53a must be sufficient to accommodate the size or f-number of each of the plano-spherical lenses which along with the dimensions of the mask transparent areas are selected to produce object beams OB having an angular spread that corresponds to the central angular region as defined by MVSS 108. In particular, since the diffuser 52 is displaced from the plano-convex lenses by the focal length of such lenses, each lens collimates the output of each point on the portion of the diffusion screen uncovered by a corresponding mask transparent area 54a, and thus the size of the mask and the f-number of the lenses, which can be further controlled by masking, determine the angular spread of the object beams OB. The distance between the holographic recording film and the plano-convex lenses is selected such that each of the mask transparent areas 53a is completely filled with light from a corresponding plano-convex lens, and overlap of the outputs of the plano-convex lenses at the uncovered areas of the holographic recording layer is avoided.

As more particularly shown in FIG. 7, a holographic recording assembly 60 is disposed beneath an exposure mask assembly 50. The holographic recording assembly 60 is comprised of a glass substrate 63, a holographic recording layer 61 disposed on the glass substrate 63, a thin cover layer 65 disposed over the holographic recording layer 61, and a light absorbing layer 71 adjacent the bottom of the glass substrate 63 and index matched thereto by layer of index matching fluid 73. The exposure mask assembly 50 is comprised of the mask 51 and a mask supporting substrate 55. The hologram recording assembly 60 and the exposure mask assembly 50 are oriented with the exposure mask 51 and the thin cover layer 65 facing each other and separated by a very thin layer of index matching fluid 57.

By way of illustrative example, the holographic recording assembly 60 is movable, for example by a computer driven motor, such that areas that correspond to the cells of the CHMSL hologram can be selectively positioned beneath the mask transparent areas 51a. In order to limit illumination to the cells uncovered by the mask transparent areas, the mask and the mask substrate are secured in the opening of an opaque top cover of a conventional oil gate trough 69, wherein the top cover is sufficiently large to ensure that only the portions of the hologram recording layer beneath the mask transparent areas 51a will be exposed to construction illumination for all exposure positions of the hologram recording layer.

The reference beams for exposure comprise portions of a collimated beam CB2, whose angle is based on an illustrative example of a CHMSL that is illuminated from below as illustrated in FIG. 1. The top of the CHMSL hologram corresponds to the left edge of the hologram recording layer that is perpendicular to the plane of the figure.

Exposure of cells uncovered by the mask transparent areas 51a is accomplished by positioning the hologram recording assembly to locate the areas of the hologram recording layer corresponding to the cells beneath the mask transparent areas and illuminating the unmasked cells with construction illumination via the plano-spherical lens array and the collimated beam CB2. As a result of the earlier masked desensitizing exposure to form the non-hologram cells, holograms can be formed only in the areas of the hologram recording layer that are intended to be hologram cells.

By way of illustrative example, the cell rows are exposed in sequence, and within each row cell, subsets of the set of cells that ultimately form the row can be subjected to construction illumination in a sequence. Thus, for the particular example wherein the spacing between mask transparent areas is three cells, for each row i the hologram recording assembly would be moved to uncover a first cell subset comprised of the cells C(i,j) wherein j is equal to 1, 4, 7, 10, etc. After the hologram recording assembly has settled, such first cell subset would be exposed with construction illumination. The hologram recording assembly would then be moved to uncover a second cell subset comprised of the cells C(i,j) wherein j is 2, 5, 8, 11, etc. After the hologram recording assembly has settled, such second cell subset would be exposed with construction illumination. The procedure of indexing the hologram recording assembly by one cell along a row, and exposing the uncovered cells with construction illumination would be repeated as required to subject all of the cells in a given row to hologram construction illumination. Although all cell areas in a given row are illuminated with hologram construction illumination, holograms can form only in those cell areas that have not been desensitized. Depending upon the number of cells in a row, the number of transparent areas in the mask, and the spacing between mask transparent areas, it should be appreciated that in one or more of the later indexed positions in a row, the number of cells uncovered can be less than the number of cells uncovered in the first indexed position.

In the foregoing procedure wherein the hologram recording layer is moved relative to the mask, the object beam forming lenses are stationary, and the reference beams comprise collimated beams, each cell is exposed with substantially the same reference beam incidence angle where such reference beam angle is formed between the plane of the cell and a line that passes through the center of the cell and is parallel to the central axis of the collimated beam CB2. To the extent that a non-collimated reference beam shape is utilized, the reference beam angle would be the same for all cells but the playback beam angle for a corresponding non-collimated playback beam shape will not be the same for all cells, which will result in reduced brightness if constructed with respective reference beams having substantially the same incidence angle. In order to more accurately emulate the playback source, the reference beam incidence angle can be changed for each row of cells such that the reference beam incidence angle for each cell more closely approximates the playback incidence angle intended for that cell, for example as disclosed in commonly assigned copending application U.S. Serial No. 07/995,117, filed December 22, 1992, by Smith et al., entitled "MODIFIED TECHNIQUE FOR FABRICATING LOW NOISE FLOODLIT CHMSL HOLOGRAMS", incorporated herein by reference.

Referring now to FIG. 11, set forth therein by way of illustrative example is an exposure set up for recording the wide angle hologram by a sequence of exposures wherein each exposure exposes a plurality of uniformly spaced non-contiguous cells in a row. The exposure system of FIG. 10 is similar to the exposure system of FIG. 7, and like elements therein are designated with like reference numerals. The differences in the exposure system include a lambertian screen 152 which is illuminated with a collimated beam CB1 and whose output is masked by a film type mask 154 and baffles 156 which are further illustrated in FIG. 12 as viewed from the output side of the mask and in FIG. 13 as viewed from above the mask 154 and baffles 156. The mask 154 is opaque except for a horizontal linear array of mask transparent areas 154a which are separated by opaque areas 154b having a center to center spacing of S2, which is equal to an integral number of adjacent cells to be formed in the holographic recording layer being exposed, and the baffles are centered on the mask transparent areas 154a in alignment with the optical axis of the collimated beam CB1. For ease of illustration, the masked outputs of the lambertial screen 152 are depicted by a representative centerline.

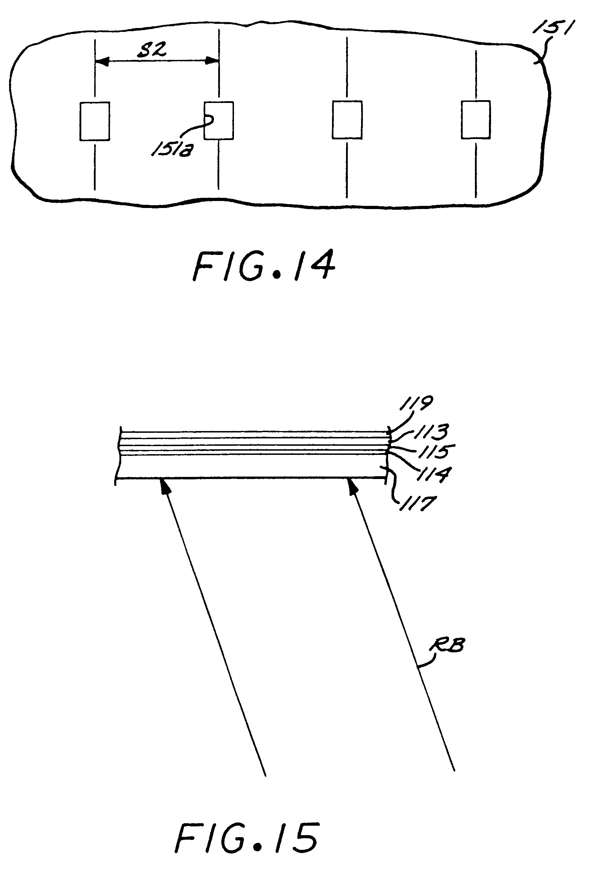

The exposure set up of FIG. 11 further employs a film type mask 151, schematically depicted in FIG. 14, that is opaque except for uniformly spaced mask transparent areas 151a of the same size as each of the cells of the wide angle hologram and aligned with the opaque areas 154b of the mask 154 so as to have the same center-to-center spacing S2 as the opaque areas 154b. The number of mask transparent areas 151a is the same as the number of opaque areas 154b. The mask 154 and the baffles 156 cooperate to produce object beams that respectively illuminate the mask transparent areas 151a that are adjacent the holographic recording layer. Each object beam effectively comprises a beam that spreads horizontally and vertically on either side of a central shadow region. The angular spread of each object beam is controlled by the center to center horizontal spacing between the mask transparent areas 154a of the mask 154, the height of the mask transparent areas 154a, and the distance of the mask 154 and lambertian screen from the mask transparent areas 151a adjacent the holographic recording layer; while the angular extent of the shadow region is controlled by the width of the intervening opaque areas 154b of the mask 154 and the distance of the mask 154 and lambertial screen. The angular field of each object beam is particularly controlled to correspond to the two horizontal regions on either side of the central solid angular region such that the combination of both holograms meets the horizontal wide angle requirement.

By way of illustrative example, the cell rows of wide angle hologram made pursuant to the exposure set up of FIG. 11 are exposed in an indexed manner as described above with respect to the exposure set up of FIG. 7.

Further in accordance with the invention, a narrow angle hologram master and a wide angle hologram master can be made with the exposure systems of FIGS. 7 and 11, respectively, and such masters are then utilized to make the holograms 31, 32 of the holographic center high mounted stoplight of FIG. 1. The narrow angle hologram master and the wide angle hologram master can be copied separately to make separate copies of each, or they can be laminated together and copied to make a composite hologram. In either case, the efficiencies of the narrow angle hologram master and the wide angle hologram master made pursuant to the exposure systems of FIGS. 7 and 10 need to the selected such that the hologram copies provide the desired efficiencies.

Referring in particular to FIG. 15, schematically depicted therein is a copy system for making hologram copies from hologram masters made pursuant to the exposure systems of FIGS. 7 and 11. The copy system includes a master hologram 111, an adjacent holographic recording layer 113 that is located at a minimum distance from the master hologram, and an intervening thin layer of index matching fluid 115. The master hologram is supported by a glass substrate 117, while the holographic recording layer 113 is supported by an opaque backing layer 119. In use, a copy reference beam RB that emulates the reference beam utilized to construct the master hologram 111 is directed to the glass substrate at an angle that produces the proper beam angle for reconstruction of the hologram master 111. The copy reference beam passes through the glass substrate 117, and is partially diffracted by the master hologram 111. The diffracted and undiffracted light from the master hologram interfere in the holographic recording layer to make the hologram copy.

For maximum efficiency for a narrow angle hologram copy, the narrow angle hologram utilized as the narrow angle hologram master should have an efficiency of 50% so as to provide a 1 to 1 beam ratio for the example of a DuPont HRF 600 photopolymer holographic recording layer. For a wide angle hologram copy having an efficiency in the range of about 30% to 40%, for the implementation wherein the wide angle hologram is closest to the reconstruction source 30, the wide angle hologram utilized as the wide angle hologram master should have an efficiency in the range of about 10% to 20% for the example of a DuPont HRF 600 photopolymer holographic recording layer. For a wide angle hologram copy having an efficiency of at least 90%, for the implementation wherein the narrow angle hologram is closest to the reconstruction source 30, the wide angle hologram utilized as the wide angle hologram master should have an efficiency in the range of about 50% for the example of a DuPont HRF 600 photopolymer holographic recording layer.

As discussed previously, the narrow angle hologram master and the wide angle hologram master can be copied separately to make separate copies of each, or they can be laminated together and copied to make a composite hologram copy that would be utilized in place of the first and second holograms 31, 32. The copy system of FIG. 14 can be utilized to produce a composite hologram copy by utilizing a laminate of a narrow angle hologram master and a wide angle hologram master as the hologram master 111. In the composite copy, the narrow angle hologram cells and the wide angle hologram cells are superimposed in the hologram copy layer.

In making a composite copy, the relative efficiencies of the narrow angle and wide angle hologram masters must be properly selected since light diffracted light from one hologram master can interfere with diffracted light from the other hologram master to produce cross-modulation noise holograms. This problem can be alleviated by reducing the diffracted outputs of both hologram masters that comprise object beams in the construction of the composite hologram copy. For example, a narrow angle hologram master efficiency of about 25% and a wide angle hologram master efficiency of about 5% for a DuPont HRF 600 photopolymer holographic recording layer sufficiently reduces the cross-modulation noise holograms while minimizing loss in the efficiencies of the desired diffraction directions of the copy. In implementations wherein the bright and dark (or dim) cell pattern of the narrow angle hologram cell pattern is the negative of the bright and dark (or dim) cell pattern of the wide angle hologram, there will be substantially no cross-modulation noise holograms, and each of the hologram masters can have an efficiency of about 50%.

In the above described copy procedures, each of the master holograms contained the desired pattern of hologram and non-hologram cells. As an alternative procedure for the copy process wherein separate narrow angle and wide angle hologram copies are made from separate hologram masters, a copy hologram can be made by pre-exposing a holographic recording layer to define the desired non-hologram cells and then copying the appropriate hologram master thereto wherein all of the cells of the hologram master are hologram cells. In this manner, since the non-hologram cells were defined by desensitizing pre-exposure, holograms will be formed only in those areas of the holographic recording layer in which hologram cells are intended to be formed.

While the hologram assembly of the invention has been described in the foregoing in the context of holograms that provide orthoscopic images for purposes of illustrative example, the invention also contemplates holograms that provide pseudoscopic images. For example, one or both of the holograms 31, 32 of the hologram assembly can be rotated 180 degrees about a horizontal axis such that the original top of the hologram is at the bottom and the hologram surface that was originally toward the inside of the vehicle is now toward the outside of the vehicle. Each of the cells of a hologram rotated in such manner would produce an image of a point source or a line source that is located behind the hologram (i.e., towards the rear of the vehicle), with the horizontal and vertical spread being determined as if a converging beam were masked by the boundaries of the cell.

In accordance with a further aspect of the invention, a single narrow angle hologram can be utilized for the hologram assembly of the holographic center high mounted stoplight of FIG. 1, in which case the coverage for the peripheral regions would be provided by scattered illumination.

The foregoing has been a disclosure of a holographic center high mounted stoplight that meets governmentally required luminous intensity and angular coverage requirements while minimizing the power required. The hologram structure of the holographic center high mounted stoplight of the invention can be configured to produce a lenticulated appearance similar to that of conventional stoplights, and is amenable to efficient production by separate copying of respective hologram layers to respective hologram copy layers, or by copying of a plurality of hologram layers to a single layer hologram copy.

Although the foregoing has been a description and illustration of specific embodiments of the invention, various modifications and changes thereto can be made by persons skilled in the art without departing from the scope and spirit of the invention as defined by the following claims.

## Claims

1. A holographic center high mounted stoplight system for a vehicle, comprising:
a light source (30) for providing a reconstruction beam;
a first array (31) of non-overlapping hologram and non-hologram cells, each hologram cell producing a diffuse image viewable in a first predetermined angular field pursuant to diffraction of a portion of said reconstruction beam, said first array of cells arranged in a first predetermined pattern so as to produce a pattern of light and dark areas; and
a second array (32) of non-overlapping hologram and non-hologram cells, each hologram cell producing diffuse image viewable in a second predetermined angular field pursuant to diffraction of a portion of said reconstruction beam, said second array of cells arranged in a second predetermined pattern so as to produce a pattern of light and dark areas;
whereby said diffuse images produced by said first and second holograms form stoplight illumination.

2. The holographic center high mounted stoplight system of Claim 1 wherein said first array of hologram and non-hologram cells is formed in a first hologram layer, and wherein said second array of hologram and non-hologram cells is formed in a second hologram layer, said first and second hologram layers being laminarly attached to each other.

3. The holographic center high mounted stoplight system of Claim 1 wherein said first array of hologram and non-hologram cells and said second array of hologram and non-hologram cells are formed in a single hologram layer.

4. The holographic center high mounted stoplight system of Claims 2 or 3 wherein said hologram and non-hologram cells of said first array and said hologram and non-hologram cells of said second array are substantially identical in shape.

5. The holographic center high mounted stoplight system of Claims 1, 2, 3 or 4 wherein said first predetermined angular field comprises a central angular region having vertical and horizontal extent, and wherein said second predetermined angular field includes first and second peripheral angular regions that are horizontally on either side of said central angular region.

6. A holographic center high mounted stoplight system for a vehicle, comprising:
a light source (30) for providing a reconstruction beam;
an array (32) of non-overlapping hologram and non-hologram cells, each hologram cell producing a diffuse image viewable in a predetermined angular field pursuant to diffraction of a portion of said reconstruction beam, said array of cells arranged in a predetermined pattern so as to produce a pattern of light and dark areas;
whereby said diffuse images produced by said hologram cells form stoplight illumination.

7. A holographic center high mounted stoplight system for a vehicle, comprising:
a light source (30) for providing a reconstruction beam;
a first array (31) of non-overlapping bright hologram cells and dim hologram cells, each hologram cell producing a diffuse image viewable in a first predetermined angular field pursuant to diffraction of a portion of said reconstruction beam, said first array of cells arranged in a first predetermined pattern so as to produce a pattern of bright and dim areas; and
a second array (32) of non-overlapping bright hologram cells and dim hologram cells, each hologram cell producing diffuse image viewable in a second predetermined angular field pursuant to diffraction of a portion of said reconstruction beam, said second array of cells arranged in a second predetermined pattern so as to produce a pattern of bright and dim areas;
whereby said diffuse images produced by said first and second holograms form stoplight illumination.

8. The holographic center high mounted stoplight system of Claim 7 wherein said first array of bright hologram cells and dim hologram cells is formed in a first hologram layer, and wherein said second array of bright hologram cells and dim hologram cells is formed in a second hologram layer, said first and second hologram layers being laminarly attached to each other.

9. The holographic center high mounted stoplight system of Claim 7 wherein said first array of bright hologram cells and dim hologram cells and said second array of bright hologram cells and dim hologram cells are formed in a single hologram layer.

10. The holographic center high mounted stoplight system of Claims 8 or 9 wherein said bright hologram cells and dim hologram cells of said first array and said bright hologram cells and dim hologram cells of said second array are substantially identical in shape.

11. The holographic center high mounted stoplight system of Claims 8, 9 or 10 wherein said first predetermined angular field comprises a central angular region having vertical and horizontal extent, and wherein said second predetermined angular field includes first and second peripheral angular regions that are horizontally on either side of said central angular region.

12. A holographic center high mounted stoplight system for a vehicle, comprising:
a light source (30) for providing a reconstruction beam;
an array (32) of non-overlapping bright hologram cells and dim hologram cells, each hologram cell producing a diffuse image viewable a predetermined angular field pursuant to diffraction of a portion of said reconstruction beam, said array of cells arranged in a predetermined pattern so as to produce a pattern of bright and dim areas;
whereby said diffuse images produced by said hologram cells form stoplight illumination.
